# EUROPEAN PATENT APPLICATION

(11) **EP 3 131 036 A1**
(43) Date of publication of application: **15.02.2017**
(21) Application number: 16163985.1
(22) Date of filing: 06.04.2016
(51) Int. Cl.: G06K 9/20, G06K 9/62

(54) **A HMI SYSTEM BASED ON A 3D TOTO WORD CARD**

(30) Priority: 11.08.2015 CN 201520601881 U
(71) Applicant: Shandong Douxiang Internet Media Co., Ltd, Jinan City, Shandong 250000 (CN)
(72) Inventor: ZHOU, Xiaodong, 250000 JINAN CITY (CN)
(74) Representative: Karakatsanis, Georgios

(57) **Abstract**

The present invention relates to a HMI system based on a 3D TOTO word card, comprising a verification activation module, a scanning module, a identification module, a matching module, a display module, a camera module, a help module, a interaction module, a storage module, a sharing module and a CPU. The scanning module comprises a single-card scanning module, a combined scanning module and an experience scanning module. The verification activation module, scanning module, identification module, matching module, display module, camera module, help module, interaction module, storage module and share module are connected with CPU, respectively. The present invention increases children's practical ability in the cognitive process of Chinese characters and improves Children's participation in the cognitive process of Chinese characters, thus improving Children's efficiency and fun of cognition of Chinese characters; in addition, when entering the system, the customers need to get a verification code from the merchant, and activate the system by verification activation module, to facilitate the merchant to provide customers with other follow-up services, such as notification sending or password extracting.

## Description

### Technical Field

The present invention relates to a HMI system based on a 3D TOTO word card.

### Background Art

The existing word card systems just simply scan the Chinese characters in a picture and display the scanned information. In the process, children just see the cards and the information displayed from Chinese characters and they haven't practically written any characters, resulting in lengthening their cognitive process of Chinese characters are lengthened; not fully participating in the process of cognition of Chinese characters; lacking of Children's practical ability in the cognitive process of Chinese characters; weakening Children's efficiency and fun of cognition of Chinese characters; in addition, since the existing systems has no verification activation function, and the scanning runs when its program is started, the merchant lake of the capabilities of providing customers with follow-up services.

### Disclosure of the Invention

To make up for deficiencies of the existing technologies, the present invention provides a HMI system based on a 3D TOTO word card. By increasing the word coating process, it increases children's practical ability in the cognitive process of Chinese characters and improves Children's participation in the cognitive process of Chinese characters, thus improving Children's efficiency and fun of cognition of Chinese characters; in addition, when entering the system, the customers need to get a verification code from the merchant, and activate the system by verification activation module, to facilitate the merchant to provide customers with other follow-up services, such as notification sending or password extracting. The problems in the existing technologies are solved by the present invention.

The technical scheme of the present invention for solving the technical problem is that:
A HMI system based on a 3D TOTO word card comprises a verification activation module, a scanning module, an identification module, a matching module, a display module, a camera module, a help module, a interaction module, a storage module, a sharing module and a CPU. The scanning module comprises a single-card scanning module, a combined scanning module and an experience scanning module. The verification activation module, scanning module, identification module, matching module, display module, camera module, help module, interaction module, storage module and share module are connected with CPU, respectively.

The identification module comprises a contour identification module, a color identification module and a font identification module. The contour identification module is used for contour identification of the font on the 3D TOTO word card, and genertation of contour identification information; color recognition module is used for color identification of the font on the 3D TOTO word card, and genertation of color identification information; font identification module is used for font identification by matching of the contour identification information and the color identification information with the identification information in the identification library.

The matching module matches the corresponding subject and scene based on the font identified by identification module.

By adopting the technical scheme and increasing the word coating process, the present invention increases children's practical ability in the cognitive process of Chinese characters and improves Children's participation in the cognitive process of Chinese characters, thus improving Children's efficiency and fun of cognition of Chinese characters; in addition, when entering the system, the customers need to get a verification code from the merchant, and activate the system by verification activation module, to facilitate the merchant to provide customers with other follow-up services, such as notification sending or password extracting.

### Brief Description of Drawings

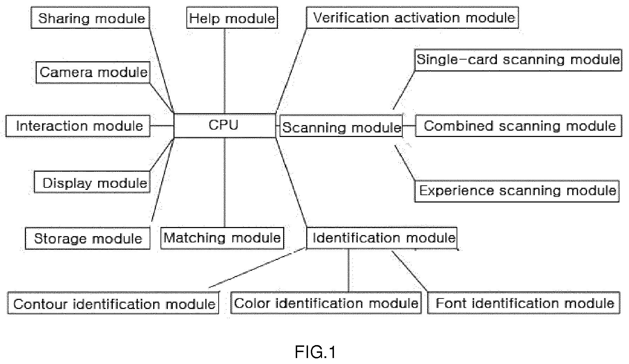

FIG. 1 is a structure diagram of the present invention.

### Best Mode for Carrying out the Invention

To clearly explain the technical characteristics of the technical scheme, the following specific embodiment is given by combining with a drawing to further elaborate the details of the present invention.

As shown in FIG. 1, a HMI system based on a 3D TOTO word card, comprising a verification activation module, a scanning module, a identification module, a matching module, a display module, a camera module, a help module, a interaction module, a storage module, a sharing module and a CPU. The scanning module comprises a single-card scanning module, a combined scanning module and an experience scanning module. The verification activation module, scanning module, identification module, matching module, display module, camera module, help module, interaction module, storage module and share module are connected with CPU, respectively.

The identification module comprises a contour identification module, a color identification module and a font identification module. The contour identification module is used for contour identification of the font on the 3D TOTO word card, and genertation of contour identification information; color recognition module is used for color identification of the font on the 3D TOTO word card, and genertation of color identification information; font identification module is used for font identification by matching of the contour identification information and the color identification information with the identification information in the identification library.

The matching module matches the corresponding subject and scene based on the font identified by identification module.

When using, write along the contour of Chinese characters on the 3D TOTO Word Card with color pens, and turn on the main interface of the system, click experience scanning module to skip to an experience scanning scene interface, wherein 3D TOTO word card are two cards selected from each category of a plurality of categories and displayed in 3D animation. Click the single-card scanning module on the main interface to skip to a single-card scanning module scene interface, the coated font on the 3D TOTO word cards are scanned by single-card scanning module any information can't be scanned if the font on the card has not been coated with color pens, in order to prompt children to coat the word, then scan and transmit the scan information to identification module by CPU; the corresponding information on 3D TOTO word card are identified by contour identification module, color identification module and font identification module in the identification module, respectively; and the identified information is transmitted to the matching module by CPU; then when the information which is transmitted from CPU is received by matching module, it is matched with the information previously stored in the storage module by CPU; the corresponding information in the storage module is picked after the matching is succeeded; the picked information is transmitted to display module by CPU and displayed in 3D animation by CPU. Click the combined scanning module on main interface, a single card scanning module to skip to single-card scanning module scene interface, and the font on two coated 3D TOTO word cards are scanned by scanning module, and then the scanned information is transmitted to the identification module by CPU, the corresponding information on combined 3D TOTO word card are identified by contour identification module, color identification module and font identification module in the identification module, respectively; and the identified information is transmitted to the matching module by CPU; then when the information which is transmitted from CPU is received by matching module, it is matched with the information previously stored in the storage module by CPU. the corresponding information in the storage module is picked after the matching is succeeded; the picked information is transmitted to display module by CPU and displayed in 3D animation by CPU; the information displayed on the display module can be photographed by camera module, and the information captured by camera module are stored into the store module by CPU and shared by share module. During operation, the corresponding help information can be captured by share module; by increasing the word coating process, it increases children's practical ability in the cognitive process of Chinese characters and improves Children's participation in the cognitive process of Chinese characters, thus improving Children's efficiency and fun of cognition of Chinese characters; in addition, when entering the system, the customers need to get a verification code from the merchant, and activate the system by verification activation module, to facilitate the merchant to provide customers with other follow-up services, such as notification sending or password extracting.

The specific embodiments described above cannot define the scope of protection of the present invention. For the technical staff in the invention, any possible change or replacement of the present invention belongs to the scope of protection of the present invention.

The details not described in the present invention are known to the technical staff in the invention.

## Claims

1. A HMI system based on a 3D TOTO word card is **characterized in that**:
comprising a verification activation module, a scanning module, a identification module, a matching module, a display module, a camera module, a help module, a interaction module, a storage module, a sharing module and a CPU. The scanning module comprises a single-card scanning module, a combined scanning module and an experience scanning module. The verification activation module, scanning module, identification module, matching module, display module, camera module, help module, interaction module, storage module and share module are connected with CPU, respectively.

2. The HMI system based on a 3D TOTO word card of claim 1 is **characterized in that**: The identification module comprises a contour identification module, a color identification module and a font identification module. The contour identification module is used for contour identification of the font on the 3D TOTO word card, and genertation of contour identification information; color recognition module is used for color identification of the font on the 3D TOTO word card, and genertation of color identification information; font identification module is used for font identification by matching of the contour identification information and the color identification information with the identification information in the identification library.

3. The HMI system based on a 3D TOTO word card is **characterized in that**:
The matching module matches the corresponding subject and scene based on the font identified by identification module.
